# EUROPÄISCHE PATENTSCHRIFT

(11) **EP 4 176 184 B1**
(45) Veröffentlichungstag und Bekanntmachung des Hinweises auf die Patenterteilung: **05.08.2026**
(21) Anmeldenummer: 21820114.3
(22) Anmeldetag: 09.06.2021
(51) Int. Cl.: F16H 57/021, F16H 57/031, F16H 57/04, F16J 15/3204, F16H 57/02, F16J 15/00, F16J 15/34

(54) **GETRIEBE MIT EINER WELLE UND EINEM GEHÄUSETEIL**
TRANSMISSION WITH A SHAFT AND A HOUSING PART
TRANSMISSION COMPRENANT UN ARBRE ET UNE PARTIE CARTER

(30) Priorität: 01.07.2020 CN 202010621094; 22.07.2020 DE 102020004405
(43) Veröffentlichungstag der Anmeldung: 10.05.2023
(73) Patentinhaber: SEW-EURODRIVE GmbH & Co. KG, 76646 Bruchsal (DE)
(72) Erfinder: WU, Zili, 300060 Tianjin (CN)
(86) Internationale Anmeldenummer: PCT/EP2021/025201
(87) Internationale Veröffentlichungsnummer: WO 2022/002430

(56) Entgegenhaltungen:
- WO-A1-2012/123046
- CN-A- 103 867 691
- CN-A- 104 048 022
- CN-A- 105 465 339
- CN-A- 108 953 567
- CN-U- 202 125 617
- DE-A1- 102017 213 081
- JP-U- H0 720 458

## Beschreibung

Die Erfindung betrifft ein Getriebe mit einer Welle und einem Gehäuseteil.

Es ist allgemein bekannt, dass ein Getriebe eine mittels Lager in einem Gehäuseteil des Getriebes gelagerte Welle aufweist, mit welcher ein Verzahnungsteil verbunden ist.

Aus der JP H07 - 81674 B2 ist eine Lageranordnung für eine Welle bekannt.

Aus der US 2018/ 0 202 331 A1 ist ein Antriebsstrang eines Fahrzeugs bekannt.

Aus der JP 2002 - 372 133 A ist ein Getriebe bekannt.

Aus der DE 11 2009 005 478 B4 ist eine Differentialvorrichtung für ein Fahrzeug bekannt.

Aus der US 4 586 395 A ist eine Schmieranordnung in einem Fahrzeuggetriebe bekannt.

Aus der JP H07 - 20458 U ist ein Getriebe bekannt.

Aus der US 4 621 710 A ist eine Schmieranordnung bekannt.

Aus der CN 108 953 567 A ist als nächstliegender Stand der Technik ein Getriebe bekannt.

Aus der CN 104 048 022 A ist ebenfalls ein Getriebe bekannt.

Aus der CN 103 867 691 A ist eine Lageranordnung bekannt.

Aus der CN 202 125 617 U ist eine Lageranordnung für eine Welle bekannt.

Aus der WO 2012/123046 A1 ist eine Getriebevorrichtung bekannt.

Aus der DE 10 2017 213081 A1 ist ein Lastschaltgetriebe bekannt.

Aus der CN 105 465 339 A ist ein Parallelwellengetriebe bekannt.

Der Erfindung liegt daher die Aufgabe zugrunde, ein Getriebe mit höherer Standzeit auszubilden.

Erfindungsgemäß wird die Aufgabe bei dem Getriebe nach den in Anspruch 1 angegebenen Merkmalen gelöst.

Wichtige Merkmale der Erfindung bei dem Getriebe mit einer Welle und einem Gehäuseteil sind, dass in dem Gehäuseteil ein Lager, insbesondere ein Lager zur drehbaren Lagerung der Welle, aufgenommen ist,
wobei ein Flanschteil mit dem Gehäuseteil verbunden ist,
wobei zumindest ein Wellendichtring im Flanschteil aufgenommen ist,
wobei der Wellendichtring das Flanschteil zur Welle hin abdichtet,
wobei ein Dichtring axial zwischen dem Wellendichtring und dem Lager angeordnet ist,
so dass zwischen dem Dichtring und dem Lager, insbesondere zwischen dem Dichtring und den Wälzkörpern des Lagers, ein erster Raumbereich ausgebildet ist, welcher mit Öl zumindest teilweise befüllbar ist, insbesondere zur Versorgung des Lagers oder der Wälzkörper des Lagers mit Schmieröl,
und so, dass zwischen dem Dichtring und dem Wellendichtring ein zweiter Raumbereich ausgebildet ist, welcher mit Öl zumindest teilweise befüllbar ist, insbesondere zur Versorgung des Wellendichtrings mit Schmieröl,
wobei der zweite Raumbereich über einen **ersten** Kanal in eine erste Radialbohrung des Flanschteils mündet,
wobei der erste Raumbereich in die erste Radialbohrung mündet.

Von Vorteil ist dabei, dass der geförderte Ölstrom aufgeteilt wird in einen ersten Anteil, welcher von der ersten Radialbohrung in den ersten Raumbereich geführt wird und dort die Lager mit Schmiermittel versorgt, insbesondere also die Wälzkörper des Lagers schmiert und deren Wärme abtransportiert, ohne dass der Wellendichtring mit dieser vom Lager im Ölstrom aufgenommenen Wärme belastet wird. Denn ein zweiter Anteil des geförderten Ölstroms wird zu dem Wellendichtring geführt, der somit mit kühlem Öl versorgt ist.

Der Wellendichtring ist als Wellendichtringpaar ausführbar. Dabei sitzen zwei Wellendichtringe axial nebeneinander und berühren sich. Vorzugsweise ist der dem Dichtring zugewandte Wellendichtring des Wellendichtringpaars mit dem durch den ersten Kanal fließenden Anteil des Ölstroms versorgt und der andere, also der Wellendichtring des Wellendichtringpaars, welcher weiter vom Dichtring entfernt angeordnet ist, mit Fett geschmiert.

Bei einer vorteilhaften Ausgestaltung strömt ein von einer Ölförderanordnung geförderter Ölstrom in die erste Radialbohrung. Von Vorteil ist dabei, dass ein Ölstrom von einer aktiven und/oder passiven Ölförderanordnung gefördert wird, also im Gravitationsfeld dem Öl potentielle Energie zuführt, und dann das Öl am Wellendichtring oder am Lager vorbeiströmt, während es die zugeführte potentielle Energie verringert. Somit ist eine Versorgung mit Schmieröl für den Wellendichtring und auch das Lager erreichbar.

Bei einer vorteilhaften Ausgestaltung strömt ein erster Anteil des von der Ölförderanordnung geförderten Ölstroms über die erste Radialbohrung in den ersten Raumbereich,
wobei ein zweiter Anteil des von der Ölförderanordnung geförderten Öls über die erste Radialbohrung in den zweiten Raumbereich strömt. Von Vorteil ist dabei, dass der erste Anteil mindestens zehnmal größer als der zweite Anteil ist, so dass zumindest ein wesentlicher Anteil der Verlustwärme des Lagers vom Öl abtransportierbar ist und so, dass zumindest ein wesentlicher Anteil der Verlustwärme des Wellendichtrings vom Öl abtransportierbar ist, der außerdem noch mit Öl versorgt ist, insbesondere so dass der Ölfilm im Bereich der Dichtlippe des Wellendichtrings und der Welle nicht abreißt.

Bei einer vorteilhaften Ausgestaltung weist die Ölförderanordnung eine von einem Elektromotor oder von einer Welle des Getriebes angetriebene Ölpumpe auf und/oder weist ein Mittel zum Auffangen von bei Drehbewegung der Verzahnungsteile des Getriebes hochgespritztem, insbesondere entgegen der Gravitationskraftrichtung gespritztem, Öl auf. Von Vorteil ist dabei, dass bei Verwendung eines Elektromotors das Öl schon vor Starten der Drehbewegung der Welle das Lager schmiert und dass bei Ausführung der Ölpumpe als Wellenendpumpe keine separate und/oder zusätzliche Energieversorgung für einen Elektromotor der Ölpumpe notwendig ist.

**Erfindungsgemäß** mündet eine durch das Gehäuseteil durchgehende Axialbohrung in die erste Radialbohrung,
insbesondere so, dass Schmieröl des Getriebes in die erste Radialbohrung förderbar ist. Von Vorteil ist dabei, dass eine einfache Herstellung einer Ölversorgung erreichbar ist.

Erfindungsgemäß ist der erste Kanal als Radialbohrung ausgeführt, welche einen kleineren Durchmesser als die erste Radialbohrung aufweist. Von Vorteil ist dabei, dass der zum Wellendichtring fließende Ölstromanteil kleiner ist als der zum Lager fließende Ölstromanteil.

Bei einer vorteilhaften Ausgestaltung ist das Lager ein Schräglager und/oder die Welle als Hohlwelle ausgeführt,
insbesondere wobei die Welle eine abtreibende Welle des Getriebes ist, wobei die Welle den größten Durchmesser aller Wellen des Getriebes aufweist. Von Vorteil ist dabei, dass über die von der Welle angetriebene Last Querkräfte einleitbar sind, die das Lager aufzunehmen vermag.

Bei einer vorteilhaften Ausgestaltung ist das Flanschteil mit dem Dichtring einstückig, insbesondere einteilig, ausgeführt,
insbesondere
- wobei das Flanschteil mit dem Dichtring aus einem Kunststoff als Kunststoffspritzgussteil gefertigt ist
- oder wobei das Flanschteil mit dem Dichtring aus einem Metall gefertigt ist
- oder wobei das Flanschteil mit dem Dichtring als additiv gefertigtes Bauteil ausgeführt ist, bei welchem die erste und die zweite Radialbohrung als urgeformter oder additiv geformter Kanal ausgeführt sind, insbesondere also nicht durch Bohren hergestellt sind.

Von Vorteil ist dabei, dass eine einfache Herstellung und verbesserte Dichtigkeit ermöglicht ist. Bei Ausführung aus Kunststoff ist eine sehr kostengünstige Herstellung ermöglicht, wobei allerdings der Wellendichtring vorzugsweise als Wellendichtringpaar ausgeführt ist, damit bei hohen Querkräften eine genügende Dichtigkeit vorhanden ist. Bei der Ausführung aus Metall ist wichtig, dass ein genügend großer Spalt zwischen Dichtring und Welle vorhanden ist, damit bei dem Auftreten von Querkräften die Welle nicht in Berührung mit dem Dichtring kommt. Bei additiver Ausführung ist das Flanschteil mit dem Dichtring aus einem Metall, insbesondere Aluminium, oder aus einem Kunststoff ausführbar.

Erfindungsgemäß mündet ein zweiter Kanal in eine zweite Radialbohrung,
wobei der Durchmesser des ersten Kanals kleiner ist als der Durchmesser des zweiten Kanals. Von Vorteil ist dabei, dass der Rücklauf ohne besonderen Widerstand gewährleistet ist.

Bei einer vorteilhaften Ausgestaltung mündet die zweite Radialbohrung des Flanschteils in eine zweite, durch das Gehäuseteil durchgehende Axialbohrung, welche in den Innenraum des Getriebes mündet. Von Vorteil ist dabei, dass das geförderte Öl nach dem Versorgen des Lagers beziehungsweise des Wellendichtrings rückführbar ist in den Ölsumpf des Getriebes. Aus dem Ölsumpf fördert dann die Ölförderanordnung das abgekühlte Öl oder mittels der Ölförderanordnung wird das hochgespritzte Öl der ersten Radialbohrung und daraus dann dem Lager beziehungsweise dem Wellendichtring zugeführt.

Erfindungsgemäß ist mit dem Flanschteil eine Abdeckplatte verbunden,
wobei die Abdeckplatte auf der von dem Dichtring axial abgewandten Seite des Wellendichtrings angeordnet ist. Von Vorteil ist dabei, dass ein Staubschutz des Wellendichtrings erreichbar ist. Nur ein schmaler Spalt zwischen Abdeckplatte und Welle verbleibt.

Erfindungsgemäß umfasst der von der Abdeckplatte überdeckte Radialabstandsbereich den von dem Wellendichtring überdeckten Radialabstandsbereich mit Ausnahme des von einer Dichtlippe des Wellendichtrings überdeckten Radialabstandsbereichs,
wobei die Dichtlippe des Wellendichtrings eine fein bearbeitete Lauffläche der Welle berührt und wobei die Abdeckplatte beabstandet ist von der Welle. Von Vorteil ist dabei, dass die Abdeckplatte den Wellendichtring abdeckt - mit Ausnahme eines engen Spaltbereichs zur Welle hin.

Bei einer vorteilhaften Ausgestaltung ist der Dichtring aus einem Kunststoff und/oder Gummi gefertigt. Von Vorteil ist dabei, dass eine einfache Herstellung ermöglicht ist und durch das kühle Öl auch thermisch wenig belastbare Stoffe verwendbar sind.

Bei einer vorteilhaften Ausgestaltung berührt der Dichtring das Flanschteil in Umfangsrichtung mit Ausnahme der von dem ersten und von dem zweiten Kanal überdeckten Umfangswinkelbereiche vollständig. Von Vorteil ist dabei, dass eine hohe Dichtigkeit für den zweiten Raumbereich gegenüber dem ersten Raumbereich mit dem höheren Temperaturniveau erreichbar ist.

Bei einer vorteilhaften Ausgestaltung umfasst der von dem Dichtring überdeckte Radialabstandsbereich den vom Wellendichtring überdeckten Radialabstandsbereich. Von Vorteil ist dabei, dass der Dichtring und der Wellendichtring auf demselben Durchmesser angeordnet sind.

Bei einer vorteilhaften Ausgestaltung überlappt der von dem Dichtring überdeckte Radialabstandsbereich mit dem vom Wellendichtring überdeckten Radialabstandsbereich. Von Vorteil ist dabei, dass der Dichtring den zweiten Raumbereich vom ersten Raumbereich genügend abschirmt.

Erfindungsgemäß ist die erste Radialbohrung mittels eines in die erste Radialbohrung zumindest teilweise eingesteckten Stopfens zur Umgebung hin abgedichtet. Von Vorteil ist dabei, dass eine einfache Herstellung ausführbar ist.

Erfindungsgemäß ist die zweite Radialbohrung mittels eines in die zweite Radialbohrung zumindest teilweise eingesteckten Stopfens zur Umgebung hin abgedichtet. Von Vorteil ist dabei, dass eine einfache Herstellung ausführbar ist.

Weitere Vorteile ergeben sich aus den Unteransprüchen. Die Erfindung wird durch die nachfolgenden Ansprüche definiert.

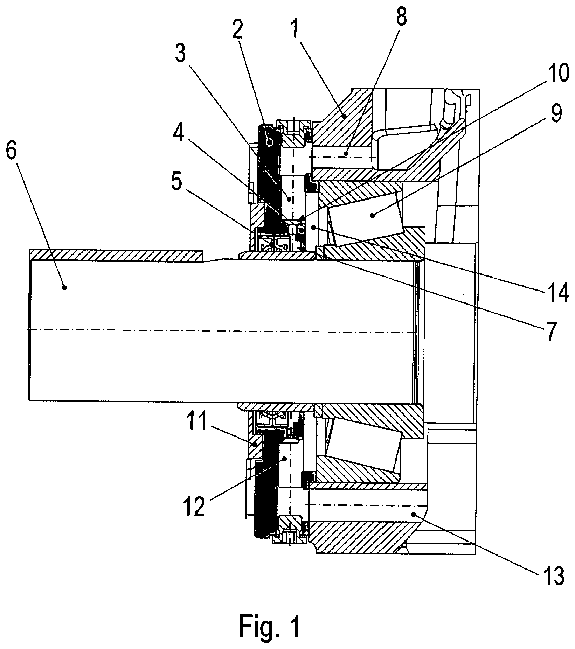

Die Erfindung wird nun anhand von schematischen Abbildungen näher erläutert:
In der **zum Stand der Technik für die Erleichterung des Verständnisses der Erfindung** gehörenden Figur 1 ist ein Querschnitt durch ein eine Lageranordnung aufweisendes Getriebe dargestellt, welches nicht unter den Schutzumfang der nachfolgenden Ansprüche fällt.

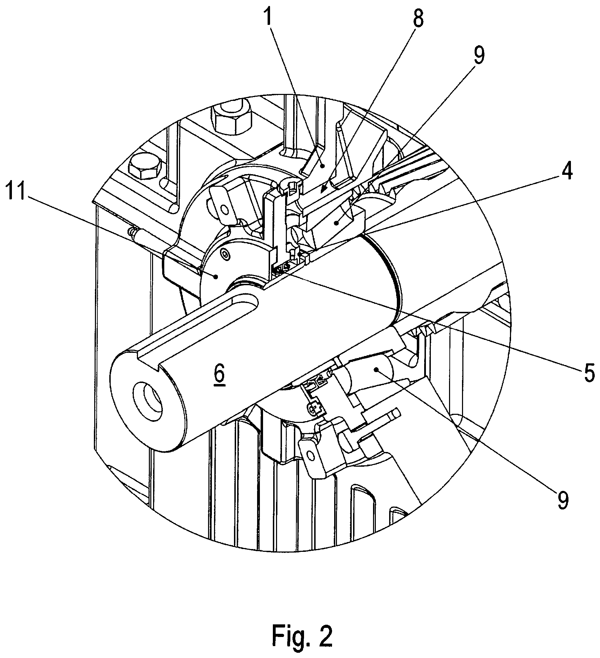

In der **zum Stand der Technik für die Erleichterung des Verständnisses der Erfindung** gehörenden Figur 2 ist eine Schrägansicht eines angeschnittenen Bereichs des nicht erfindungsgemäßen Getriebes dargestellt.

Wie in den Figuren gezeigt, ist eine Welle 6, insbesondere Hohlwelle, mittels eines Lagers 9, insbesondere Schräglagers, drehbar gelagert, wobei das Lager 9 in einem Gehäuseteil 1 des nicht erfindungsgemäßen Getriebes aufgenommen ist.

Das Getriebe weist eine weitere Welle auf, welche mit einem Verzahnungsteil drehfest verbunden ist, dessen Verzahnung im Eingriff ist mit der Verzahnung eines weiteren Verzahnungsteils, das drehfest mit der Welle 6 verbunden ist.

Das Gehäuse des Getriebes ist aus dem Gehäuseteil 1 und weiteren Gehäuseteilen gebildet.

In dem vom Gehäuse umgebenen Innenraum befinden sich die Verzahnungsteile und Schmieröl. Der Innenraum ist nur teilweise mit dem Schmieröl befüllt, so dass im Ruhezustand ein Ölpegel im Innenraum vorhanden ist, welcher die Wälzkörper des Lagers 9 nicht erreicht oder nur teilweise erreicht, insbesondere also nur die tiefst gelegenen Wälzkörper des Lagers 9 trifft.

Daher weist das Getriebe eine aktive und/oder passive Ölförderanordnung auf, mit welcher zumindest bei Betrieb des Getriebes auch alle, also auch die höchstgelegenen, Wälzkörper des Lagers 9 mit Schmieröl aus dem Ölsumpf, also dem unterhalb des Ölpegels sich befindenden Schmieröl, versorgt werden.

Hierzu weist das Gehäuseteil 1 eine erste Axialbohrung 8 auf, durch welche das geförderte Schmieröl einer ersten Radialbohrung 3 zugeleitet wird, welche in einem Flanschteil 2 angeordnet ist, welches das Lager 9 zur Umgebung hin abdeckt.

Das Flanschteil 2 ist mit dem Gehäuseteil 1 mittels Schrauben und einer zwischengeordneten Flachdichtung dicht verbunden.

Die erste Radialbohrung 3 mündet in einen lichten ersten Raumbereich 14, der an das Lager 9 und insbesondere an die Wälzkörper des Lagers 9, angrenzt. Somit ist das Lager 9 über die erste Radialbohrung 3 und den lichten ersten Raumbereich 14 schmierbar mit Schmieröl.

Der lichte Raumbereich 14 grenzt direkt axial ans Lager 9 an und überdeckt zumindest den zwischen Innenring und Außenring des Lagers 9 in radialer Richtung bestehenden Freiraum. Somit grenzt der vom ersten Raumbereich in axialer Richtung überdeckte Bereich direkt an den von dem Lager 9 überdeckten axialen Bereich an. Der von dem ersten Raumbereich 14 überdeckte Radialabstandsbereich ist von dem vom Lager überdeckten Radialabstandsbereich umfasst. Denn der Innenring des Lagers 9 ist gegen einen auf der Welle 6 angeordneten Sicherungsring oder in alternativer Ausführung gegen eine Stufe der Welle 6 angestellt. Ebenso ist auch der Außenring mit einem Ringteil oder vom Flanschteil 2 selbst axial begrenzt.

Der Radialabstand ist bezogen auf die Drehachse der Welle 6, die axiale Richtung ist parallel zur Richtung der Drehachse der Welle 6.

Die Welle 6 ist vorzugsweise als abtreibende Welle ausgeführt.

Im Flanschteil 2 sind zwei axial nebeneinander, insbesondere einander berührend, angeordnete Wellendichtringe 5 aufgenommen, deren Dichtlippen auf einer auf der Oberfläche der Welle ausgebildeten, insbesondere fein bearbeiteten, insbesondere geschliffenen, Lauffläche laufen, insbesondere also diese Lauffläche berühren.

Die Wellendichtringe 5 sind auf der vom Lager 9 axial abgewandten Seite eines Dichtrings 4 angeordnet.

Der Dichtring 4 verringert oder verhindert den Ölfluss von einem zweiten Raumbereich 7 zum ersten Raumbereich 14.

Axial zwischen dem Flanschteil 2 und der Dichtring 4 ist ein radial sich erstreckender **erster** Kanal 10 ausgebildet, welcher vom ersten Raumbereich oder von der an dem ersten Raumbereich angrenzenden ersten Radialbohrung 3 zum zweiten Raumbereich 7 führt und somit Schmieröl, das vom Lager 9 noch nicht aufgeheizt ist, zumindest einem der Wellendichtringe 5 zuführt.

Somit ist ein Verschleiß der Wellendichtringe 5 verhindert.

Der Dichtring 4 ist also axial zwischen dem Lager 9 und den Wellendichtringen 5 angeordnet und bewirkt somit eine Abtrennung des Öls im Bereich des Lagers 9 vom Öl im Bereich der Wellendichtringe 5, wobei das Öl im Bereich des Lagers 9 eine höhere Temperatur aufweist als das Öl im Bereich der Wellendichtringe 5.

Die Abdeckplatte 11 ist mit dem Flanschteil 2 verbunden, insbesondere mittels Schrauben verbunden, deren Gewindebereiche in Gewindebohrungen des Flanschteils 2 eingeschraubt sind und deren Köpfe die Abdeckplatte 11 ans Flanschteil 2 andrücken.

Die Abdeckplatte 11 deckt die Wellendichtringe 5 zur Umgebung hin ab. Insbesondere umfasst der von der Abdeckplatte 11 überdeckte Radialabstandsbereich den von den Wellendichtringen 5 überdeckten Radialabstandsbereich mit Ausnahme des von den Dichtlippen der Wellendichtringe 5 überdeckten Radialabstandsbereichs. Denn die Dichtlippen berühren eine auf der Welle 6 fein bearbeitete Lauffläche. Die Abdeckplatte 11 hingegen ist beabstandet von der Welle 6.

Die Abdeckplatte 11 dient als Schutz für die Wellendichtringe 5 gegen Schmutzpartikel.

Vorzugsweise ist der Dichtring 4 vom Flanschteil 2 aufgenommen und wird somit vom Flanschteil gehalten. Der Dichtring 4, insbesondere eine am Dichtring 4 ausgebildete Dichtlippe, berührt ebenfalls die Welle 6 oder hat zumindest nur einen Abstand, der kleiner als 100µm ist.

Mittels des Durchmessers des **ersten** Kanals 10 ist die Stärke des Ölflusses, der von der ersten Radialbohrung 3 zum zweiten Raumbereich 7 durchfließt, steuerbar. Da zur Schmierung der Wellendichtringe 5 nur geringe Mengen an Öl notwendig sind, ist ein kleiner Durchmesser des **ersten** Kanals 10 ausreichend, insbesondere ein Durchmesser von weniger als zwei oder ein Zentimeter.

Der **erste** Kanal 10 ist möglichst hoch angeordnet, also möglichst nahe an der ersten Axialbohrung 8.

Im unteren Bereich des Dichtrings 4, also möglichst weit entfernt von der ersten Axialbohrung 8, ist ein weiterer Kanal als Rücklauf für das Öl am Flanschteil 2 ausgebildet, der in die zweite Radialbohrung 12 des Flanschteils 2 mündet, welche in eine zweite axiale Bohrung 13 des Gehäuseteils 1 mündet, welche das Öl in den Ölsumpf zurückführt, insbesondere zusammen mit dem mit den Wälzkörpern des Lagers 9 in Kontakt getretenen Öl.

Im Ölsumpf ist dann die mit dem Öl eingebrachte Wärme aufspreizbar und teilweise über das Gehäuse des Getriebes an die Umgebung abführbar. Das so gekühlte Öl ist dann wieder mittels der aktiven und/oder passiven Ölförderanordnung zur ersten axialen Bohrung 8 des Gehäuseteils 1 förderbar. Nur derjenige Anteil des Öls, welcher an den Wälzkörpern des Lagers 9 vorbeifließt, nimmt mehr Wärme auf als derjenige Anteil des Öls, welcher an dem Wellendichtring 5 vorbeifließt.

Die Abdeckplatte 11, das Flanschteil 2 und das Gehäuseteil 1 sind aus Metall, insbesondere Stahl, ausgeführt.

Zur Aufnahme der Wellendichtringe 5 weist das Flanschteil einen entsprechenden Sitz auf, welcher fein bearbeitet, insbesondere geschliffen, ist. Die am Sitz aufgenommenen Wellendichtringe 5 dichten das Flanschteil 2 zur Welle 6 hin ab.

Somit läuft eine Dichtlippe des Wellendichtrings 5 auf einer Lauffläche der Welle, insbesondere wobei eine Dichtlippe des Wellendichtrings 5 eine Lauffläche der Welle berührt.

Zur Aufnahme des Lagers 9 weist das Gehäuseteil 1 einen Lagersitz auf, der fein bearbeitet ist, insbesondere geschliffen ist. Das im Sitz aufgenommene Lager 9 lagert die Welle 6.

Das Flanschteil 2 weist einen Zentriersitz auf, mit welchem das Flanschteil an der Lagerbohrung des Lagers 9 zentriert ist. Hierzu ist die Lagerbohrung als zylindrische Ausnehmung im Gehäuseteil 1 des Getriebes angeordnet und fein bearbeitet, wobei der Außenring des Lagers 9 in den so erzeugten Lagersitz eingeschoben ist. An der Kante der Bohrung, die vorzugsweise ebenfalls fein bearbeitet ist, ist ein zylindrischer Zentrierbund des Flanschteils 2 in die Lagerbohrung eingeschoben. Mittels des Zentrierbundes ist das Flanschteil 2 dann an dem Gehäuseteil 1 zentriert. Der Zentrierbund des Flanschteils 2 fungiert aber auch als axiale Begrenzung für den Außenring des Lagers 9, dessen Innenring gegen einen Wellenbund der Welle 6 angestellt ist.

Der Innenring ist in der axial entgegengesetzten Richtung mittels eines in einer umlaufenden Ringnut der Welle 6 angeordneten Sicherungsrings begrenzt.

Bei weiteren erfindungsgemäßen Ausführungsbeispielen wird das Flanschteil 2 zusammen mit dem Dichtring 4 einteilig, insbesondere einstückig, aus einem Kunststoff gefertigt. Vorzugsweise wird zur Herstellung eines solchen Flanschteils 2 mit integriertem Dichtring 4 ein additives Herstellverfahren ausgeführt, insbesondere ein 3D-Drucker verwendet. Vorzugsweise wird das Flanschteil 2 mit integriertem Dichtring 4 aus Kunststoff ausgeführt. Somit ist auch eine gute Wärmeisolierung zwischen dem ersten Raumbereich 14 und dem zweiten Raumbereich 7 erreichbar.

Alternativ ist das Flanschteil 2 mit dem Dichtring 4 aber auch aus Metall ausführbar. Dabei ist dann ein genügend großer Spalt zwischen dem Dichtring 4 und der Welle 6 vorhanden, um bei auftretenden Querkräften die Welle am Berühren des Dichtrings 4 zu hindern.

Auch metallische Ausführungen sind additiv herstellbar, wobei dann statt der Bohrungen entsprechend geformte Löcher vorsehbar sind.

### Bezugszeichenliste

1 Gehäuseteil
2 Flanschteil
3 erste Radialbohrung
4 Dichtring
5 Wellendichtringe
6 Welle, insbesondere Hohlwelle
7 zweiter Raumbereich für Schmieröl
8 erste Axialbohrung
9 Lager, insbesondere Schräglager
10 **erster** Kanal
11 Abdeckplatte
12 zweite Radialbohrung
13 zweite Axialbohrung
14 erster Raumbereich

## Patentansprüche

1. Getriebe mit einer Welle (6) und einem Gehäuseteil (1),
wobei in dem Gehäuseteil (1) ein Lager zur drehbaren Lagerung der Welle (6) aufgenommen ist,
wobei ein Flanschteil (2) mit dem Gehäuseteil (1) verbunden ist,
wobei ein Wellendichtring (5) im Flanschteil (2) aufgenommen ist,
wobei der Wellendichtring (5) das Flanschteil (2) zur Welle (6) hin abdichtet,
wobei ein Dichtring (4) axial, also in axialer Richtung und somit parallel zur Richtung der Drehachse der Welle (6) gesehen, zwischen dem Wellendichtring (5) und dem Lager angeordnet ist,
so dass zwischen dem Dichtring (4) und dem Lager, insbesondere zwischen dem Dichtring (4) und den Wälzkörpern des Lagers, ein erster Raumbereich (14) ausgebildet ist, welcher mit Schmieröl zumindest teilweise befüllbar ist, zur Versorgung des Lagers, insbesondere der Wälzkörper des Lagers, mit Schmieröl,
und so, dass zwischen dem Dichtring (4) und dem Wellendichtring (5) ein zweiter Raumbereich (7) ausgebildet ist, welcher mit Schmieröl zumindest teilweise befüllbar ist, zur Versorgung des Wellendichtrings (5) mit Schmieröl,
wobei der zweite Raumbereich (7) über einen ersten Kanal (10) in eine erste Radialbohrung (3) des Flanschteils (2) mündet,
wobei der erste Raumbereich (14) in die erste Radialbohrung (3) mündet,
wobei eine erste, durch das Gehäuseteil (1) durchgehende Axialbohrung (8) in die erste Radialbohrung (3) mündet,
nämlich so, dass Schmieröl des Getriebes in die erste Radialbohrung (3) förderbar ist,
wobei der erste Kanal (10) als Radialbohrung ausgeführt ist, welche einen kleineren Durchmesser als die erste Radialbohrung (3) aufweist,
**dadurch gekennzeichnet, dass**
im unteren Bereich des Dichtrings (4), also möglichst weit entfernt von der ersten Axialbohrung (8), ein zweiter Kanal als Rücklauf für das Schmieröl am Flanschteil (2) ausgebildet ist, der in eine zweite Radialbohrung (12) des Flanschteils (2) mündet,
wobei der Durchmesser des ersten Kanals (10) kleiner ist als der Durchmesser des zweiten Kanals,
wobei mit dem Flanschteil (2) eine Abdeckplatte (11) verbunden ist,
wobei die Abdeckplatte (11) auf der von dem Dichtring (4) axial abgewandten Seite des Wellendichtrings (5) angeordnet ist,
wobei der von der Abdeckplatte (11) überdeckte Radialabstandsbereich ein sich in radialer Richtung erstreckender Bereich ist, der den von dem Wellendichtring (5) überdeckten Radialabstandsbereich mit Ausnahme des von einer Dichtlippe des Wellendichtrings (5) überdeckten Radialabstandsbereichs umfasst,
wobei die Dichtlippe des Wellendichtrings (5) eine fein bearbeitete Lauffläche der Welle (6) berührt und wobei die Abdeckplatte (11) beabstandet ist von der Welle (6),
wobei die erste Radialbohrung (3) mittels eines in die erste Radialbohrung (3) zumindest teilweise eingesteckten Stopfens zur Umgebung hin abgedichtet ist,
wobei die zweite Radialbohrung (12) mittels eines in die zweite Radialbohrung (12) zumindest teilweise eingesteckten Stopfens zur Umgebung hin abgedichtet ist.

2. Getriebe nach Anspruch 1,
**dadurch gekennzeichnet, dass**
ein von einer Ölförderanordnung geförderter Ölstrom in die erste Radialbohrung (3) strömt.

3. Getriebe nach Anspruch 2,
**dadurch gekennzeichnet, dass**
ein erster Anteil des von der Ölförderanordnung geförderten Ölstroms über die **erste** Radialbohrung (3) in den ersten Raumbereich (14) strömt,
wobei ein zweiter Anteil des von der Ölförderanordnung geförderten Schmieröls über die erste Radialbohrung (3) in den zweiten Raumbereich (7) strömt.

4. Getriebe nach Anspruch 2,
**dadurch gekennzeichnet, dass**
die Ölförderanordnung eine von einem Elektromotor oder von der Welle (6) des Getriebes oder von einer anderen Welle des Getriebes angetriebene Ölpumpe aufweist und/oder ein Mittel zum Auffangen von bei Drehbewegung der Verzahnungsteile des Getriebes hochgespritztem, insbesondere entgegen der Gravitationskraftrichtung gespritztem, Schmieröl aufweist.

5. Getriebe nach einem der vorangegangenen Ansprüche,
**dadurch gekennzeichnet, dass**
das Lager ein Schräglager ist und/oder dass die Welle (6) als Hohlwelle ausgeführt ist, insbesondere wobei die Welle (6) eine abtreibende Welle (6) des Getriebes ist, wobei die Welle (6) den größten Durchmesser aller Wellen des Getriebes aufweist.

6. Getriebe nach einem der vorangegangenen Ansprüche,
**dadurch gekennzeichnet, dass**
das Flanschteil (2) mit dem Dichtring (4) einstückig, insbesondere einteilig, ausgeführt ist, insbesondere
- wobei das Flanschteil (2) mit dem Dichtring (4) aus einem Kunststoff als Kunststoffspritzgussteil gefertigt ist
- oder wobei das Flanschteil (2) mit dem Dichtring (4) aus einem Metall gefertigt ist
- oder wobei das Flanschteil (2) mit dem Dichtring (4) als additiv gefertigtes Bauteil ausgeführt ist, bei welchem die erste und die zweite Radialbohrung (3, 12) als urgeformter oder additiv geformter Kanal ausgeführt sind, insbesondere also nicht durch Bohren hergestellt sind.

7. Getriebe nach einem der vorangegangenen Ansprüche,
**dadurch gekennzeichnet, dass**
die zweite Radialbohrung (12) des Flanschteils (2) in eine zweite, durch das Gehäuseteil (1) durchgehende Axialbohrung (13) mündet, welche in den Innenraum des Getriebes mündet.

8. Getriebe nach einem der vorangegangenen Ansprüche,
**dadurch gekennzeichnet, dass**
der Dichtring (4) aus einem Kunststoff und/oder Gummi gefertigt ist.

9. Getriebe nach einem der vorangegangenen Ansprüche,
**dadurch gekennzeichnet, dass**
der Dichtring (4) das Flanschteil (2) in Umfangsrichtung mit Ausnahme der von dem ersten und von dem zweiten Kanal überdeckten Umfangswinkelbereiche vollständig berührt.

10. Getriebe nach einem der vorangegangenen Ansprüche,
**dadurch gekennzeichnet, dass**
der von dem Dichtring (4) überdeckte Radialabstandsbereich den vom Wellendichtring (5) überdeckten Radialabstandsbereich umfasst.

11. Getriebe nach einem der vorangegangenen Ansprüche,
**dadurch gekennzeichnet, dass**
der von dem Dichtring (4) überdeckte Radialabstandsbereich mit dem vom Wellendichtring (5) überdeckten Radialabstandsbereich überlappt.

## Claims

1. Transmission with a shaft (6) and a housing part (1),
wherein a bearing for rotatably mounting the shaft (6) is accommodated in the housing part (1),
wherein a flange part (2) is connected to the housing part (1),
wherein a shaft sealing ring (5) is accommodated in the flange part (2),
wherein the shaft sealing ring (5) seals off the flange part (2) with respect to the shaft,
wherein a sealing ring (4) is arranged axially, that is to say as seen in the axial direction and thus parallel to the direction of the axis of rotation of the shaft (6), between the shaft sealing ring (5) and the bearing,
such that a first spatial area (14), which can be at least partially filled with lubricating oil, is formed between the sealing ring (4) and the bearing, in particular between the sealing ring (4) and the rolling elements of the bearing, in order to supply the bearing, in particular the rolling elements of the bearing, with lubricating oil,
and such that a second spatial area (7), which can be at least partially filled with lubricating oil, is formed between the sealing ring (4) and the shaft sealing ring (5) in order to supply the shaft sealing ring (5) with lubricating oil,
wherein the second spatial area (7) opens via a first channel (10) into a first radial bore (3) of the flange part (2),
wherein the first spatial area (14) opens into the first radial bore (3),
wherein a first axial bore (8), which extends through the housing part (1), opens into the first radial bore (3),
namely such that lubricating oil of the transmission can be conveyed into the first radial bore (3),
wherein the first channel (10) is designed as a radial bore which has a smaller diameter than the first radial bore (3),
**characterized in that**
in the lower region of the sealing ring (4), that is to say as far away as possible from the first axial bore (8), a second channel is formed on the flange part (2) as a return for the lubricating oil, which second channel opens into a second radial bore (12) of the flange part (2),
wherein the diameter of the first channel (10) is smaller than the diameter of the second channel,
wherein a cover plate (11) is connected to the flange part (2),
wherein the cover plate (11) is arranged on the side of the shaft sealing ring (5) axially remote from the sealing ring (4),
wherein the radial distance region covered by the cover plate (11) is a region extending in the radial direction whereas that region encompasses the radial distance region covered by the shaft sealing ring (5), except for the radial distance region covered by a sealing lip of the shaft sealing ring (5),
wherein the sealing lip of the shaft sealing ring (5) contacts a finely machined running surface of the shaft (6), and wherein the cover plate (11) is spaced apart from the shaft (6),
wherein the first radial bore (3) is sealed off from the environment by means of a plug which is at least partially inserted into the first radial bore (3),
wherein the second radial bore (12) is sealed off from the environment by means of a plug which is at least partially inserted into the second radial bore (12).

2. Transmission according to claim 1,
**characterized in that**
a flow of oil conveyed by an oil-conveying assembly flows into the first radial bore (3).

3. Transmission according to claim 2,
**characterized in that**
a first portion of the flow of oil conveyed by the oil-conveying assembly flows via the first radial bore (3) into the first spatial area (14),
wherein a second portion of the lubricating oil conveyed by the oil-conveying assembly flows via the first radial bore (3) into the second spatial area (7).

4. Transmission according to claim 2,
**characterized in that**
the oil-conveying assembly comprises an oil pump driven by an electric motor or by the shaft (6) of the transmission or by a different shaft of the transmission and/or comprises a means for collecting lubricating oil that is splashed up during the rotational movement of the toothed parts of the transmission, in particular splashed counter to the direction of gravity.

5. Transmission according to any of the preceding claims,
**characterized in that**
the bearing is an angular contact bearing, and/or **in that** the shaft (6) is designed as a hollow shaft,
in particular wherein the shaft (6) is an output shaft (6) of the transmission, wherein the shaft (6) has the largest diameter of all shafts of the transmission.

6. Transmission according to any of the preceding claims,
**characterized in that**
the flange part (2) is made in one piece with the sealing ring (4), in particular as a single part,
in particular
- wherein the flange part (2) together with the sealing ring (4) is manufactured from a plastics material as an injection-molded plastic part,
- or wherein the flange part (2) together with the sealing ring (4) is manufactured from a metal,
- or wherein the flange part (2) together with the sealing ring (4) is designed as an additively manufactured component, in which the first and the second radial bore (3, 12) are designed as an integrally molded or additively formed channel, that is to say in particular are not created by drilling.

7. Transmission according to any of the preceding claims,
**characterized in that**
the second radial bore (12) of the flange part (2) opens into a second axial bore (13), which extends through the housing part (1) and opens into the interior of the transmission.

8. Transmission according to any of the preceding claims,
**characterized in that**
the sealing ring (4) is manufactured from a plastics material and/or rubber.

9. Transmission according to any of the preceding claims,
**characterized in that**
the sealing ring (4) contacts the flange part (2) all the way around in the circumferential direction, except for the circumferential angle regions covered by the first and the second channel.

10. Transmission according to any of the preceding claims,
**characterized in that**
the radial distance region covered by the sealing ring (4) encompasses the radial distance region covered by the shaft sealing ring (5).

11. Transmission according to any of the preceding claims,
**characterized in that**
the radial distance region covered by the sealing ring (4) overlaps with the radial distance region covered by the shaft sealing ring (5).

## Revendications

1. Engrenage avec un arbre (6) et un élément de carter (1), dans lequel un palier pour le support rotatif de l'arbre (6) est logé dans l'élément de carter (1), dans lequel un élément de bride (2) est relié à l'élément de carter (1), dans lequel une bague d'étanchéité d'arbre (5) est logée dans l'élément de bride (2), dans lequel la bague d'étanchéité d'arbre (5) étanchéifie l'élément de bride (2) vers l'arbre (6), dans lequel une bague d'étanchéité (4) est disposée axialement, c'est-à-dire dans la direction axiale et donc parallèlement à la direction de l'axe de rotation de l'arbre (6), entre la bague d'étanchéité d'arbre (5) et le palier, de sorte qu'entre la bague d'étanchéité (4) et le palier, en particulier entre la bague d'étanchéité (4) et les éléments roulants du palier, une première zone d'espace (14) est formée, laquelle peut être au moins partiellement remplie d'huile de lubrification, pour l'alimentation du palier, en particulier des éléments roulants du palier, en huile de lubrification, et de sorte qu'entre la bague d'étanchéité (4) et la bague d'étanchéité d'arbre (5) une deuxième zone d'espace (7) est formée, laquelle peut être au moins partiellement remplie d'huile de lubrification, pour l'alimentation de la bague d'étanchéité d'arbre (5) en huile de lubrification, dans lequel la deuxième zone d'espace (7) débouche par un premier canal (10) dans un premier perçage radial (3) de l'élément de bride (2), dans lequel la première zone d'espace (14) débouche dans le premier perçage radial (3),
dans lequel un premier perçage axial (8) traversant l'élément de carter (1) débouche dans le premier perçage radial (3),
à savoir de sorte que l'huile de lubrification de l'engrenage peut être acheminée dans le premier perçage radial (3),
dans lequel le premier canal (10) est réalisé comme un perçage radial qui présente un diamètre inférieur à celui du premier perçage radial (3),
**caractérisé en ce que**
dans la partie inférieure de la bague d'étanchéité (4), c'est-à-dire aussi loin que possible du premier perçage axial (8), un deuxième canal servant de retour pour l'huile de lubrification est formé sur l'élément de bride (2), lequel débouche dans un deuxième perçage radial (12) de l'élément de bride (2),
dans lequel le diamètre du premier canal (10) est inférieur au diamètre du deuxième canal,
dans lequel une plaque de recouvrement (11) est reliée à l'élément de bride (2),
dans lequel la plaque de recouvrement (11) est disposée du côté axial opposé à la bague d'étanchéité (4) par rapport à la bague d'étanchéité d'arbre (5),
dans lequel la zone de distance radiale recouverte par la plaque de recouvrement (11) est une zone s'étendant dans la direction radiale qui comprend la zone de distance radiale recouverte par la bague d'étanchéité d'arbre (5) à l'exception de la zone de distance radiale recouverte par une lèvre d'étanchéité de la bague d'étanchéité d'arbre (5),
dans lequel la lèvre d'étanchéité de la bague d'étanchéité d'arbre (5) touche une surface de roulement finement usinée de l'arbre (6) et dans lequel la plaque de recouvrement (11) est espacée de l'arbre (6),
dans lequel le premier perçage radial (3) est étanchéifié vers l'environnement au moyen d'un bouchon au moins partiellement inséré dans le premier perçage radial (3),
dans lequel le deuxième perçage radial (12) est étanchéifié vers l'environnement au moyen d'un bouchon au moins partiellement inséré dans le deuxième perçage radial (12).

2. Engrenage selon la revendication 1, **caractérisé en ce qu'**un flux d'huile acheminé par un dispositif de pompage d'huile s'écoule dans le premier perçage radial (3).

3. Engrenage selon la revendication 2, **caractérisé en ce qu'**une première fraction du flux d'huile acheminé par le dispositif de pompage d'huile s'écoule par le premier perçage radial (3) dans la première zone d'espace (14),
dans lequel une deuxième fraction de l'huile de lubrification acheminée par le dispositif de pompage d'huile s'écoule par le premier perçage radial (3) dans la deuxième zone d'espace (7).

4. Engrenage selon la revendication 2, **caractérisé en ce que** le dispositif de pompage d'huile comprend une pompe à huile entraînée par un moteur électrique ou par l'arbre (6) de l'engrenage ou par un autre arbre de l'engrenage et/ou un moyen de récupération de l'huile de lubrification projetée vers le haut lors du mouvement de rotation des éléments dentés de l'engrenage, en particulier projetée à l'encontre de la direction de la force gravitationnelle.

5. Engrenage selon l'une des revendications précédentes, **caractérisé en ce que** le palier est un palier oblique et/ou **en ce que** l'arbre (6) est réalisé comme arbre creux,
en particulier dans lequel l'arbre (6) est un arbre de sortie (6) de l'engrenage, l'arbre (6) présentant le plus grand diamètre de tous les arbres de l'engrenage.

6. Engrenage selon l'une des revendications précédentes, **caractérisé en ce que** l'élément de bride (2) avec la bague d'étanchéité (4) est réalisé monobloc, en particulier en une seule pièce,
en particulier
- dans lequel l'élément de bride (2) avec la bague d'étanchéité (4) est fabriqué à partir d'une matière plastique comme pièce moulée par injection plastique
- ou dans lequel l'élément de bride (2) avec la bague d'étanchéité (4) est fabriqué à partir d'un métal
- ou dans lequel l'élément de bride (2) avec la bague d'étanchéité (4) est réalisé comme composant fabriqué de manière additive, dans lequel le premier et le deuxième perçage radial (3, 12) sont réalisés comme canal moulé ou formé de manière additive, en particulier donc non réalisés par perçage.

7. Engrenage selon l'une des revendications précédentes, **caractérisé en ce que** le deuxième perçage radial (12) de l'élément de bride (2) débouche dans un deuxième perçage axial (13) traversant l'élément de carter (1), lequel débouche dans l'espace intérieur de l'engrenage.

8. Engrenage selon l'une des revendications précédentes, **caractérisé en ce que** la bague d'étanchéité (4) est fabriquée à partir d'une matière plastique et/ou de caoutchouc.

9. Engrenage selon l'une des revendications précédentes, **caractérisé en ce que** la bague d'étanchéité (4) touche complètement l'élément de bride (2) dans la direction périphérique à l'exception des secteurs angulaires périphériques recouverts par le premier et le deuxième canal.

10. Engrenage selon l'une des revendications précédentes, **caractérisé en ce que** la zone de distance radiale recouverte par la bague d'étanchéité (4) comprend la zone de distance radiale recouverte par la bague d'étanchéité d'arbre (5).

11. Engrenage selon l'une des revendications précédentes, **caractérisé en ce que** la zone de distance radiale recouverte par la bague d'étanchéité (4) chevauche la zone de distance radiale recouverte par la bague d'étanchéité d'arbre (5).
